# EUROPÄISCHE PATENTSCHRIFT

(11) **EP 4 193 263 B1**
(45) Veröffentlichungstag und Bekanntmachung des Hinweises auf die Patenterteilung: **17.07.2024**
(21) Anmeldenummer: 21783392.0
(22) Anmeldetag: 05.08.2021
(51) Int. Cl.: G06F 13/40, G06F 13/42

(54) **SENSOR UND SENSORNETZWERK**
SENSOR AND SENSOR NETWORK
CAPTEUR ET RÉSEAU DE CAPTEURS

(30) Priorität: 05.08.2020 DE 102020209879
(43) Veröffentlichungstag der Anmeldung: 14.06.2023
(73) Patentinhaber: Robert Bosch GmbH, 70469 Stuttgart (DE)
(72) Erfinder: WALKER, Steffen, 72770 Reutlingen (DE); ERCKERT, Ricardo, 83043 Bad Aibling (DE)
(86) Internationale Anmeldenummer: PCT/DE2021/100674
(87) Internationale Veröffentlichungsnummer: WO 2022/028656

(56) Entgegenhaltungen:
- DE-A1- 102014 107 689
- DE-A1- 102014 113 162
- DE-A1- 102016 101 738
- "PSI5 Peripheral Sensor Interface Specification V1.3", 29 July 2008 (2008-07-29), pages 1 - 46, XP055028023, Retrieved from the Internet <URL:http://www.psi5.org/en/pool/pdf/psi5_specification_v13_080729.pdf> [retrieved on 20120523]
- DSI: "DSI3 Bus Standard, Revision 1.00", 16 February 2011 (2011-02-16), pages 1 - 45, XP055771225, Retrieved from the Internet <URL:https://www.dsiconsortium.org/downloads/DSI3_%20Bus_Standard_r1.00.pdf> [retrieved on 20210202]

## Beschreibung

### Stand der Technik

Die vorliegende Erfindung betrifft einen Sensor und ein Sensornetzwerk mit einem solchen Sensor.

Aus dem Stand der Technik sind externe Sensoren bekannt, welche über eine vordefinierte Schnittstelle, insbesondere eine Zweidrahtschnittstelle, mit einem zentralen Steuergerät verbunden sind. Als solche Schnittstellen sind beispielsweise der PSI-, insbesondere der PSI5- und der DSI-Standard bekannt. Das Steuergerät stellt in einem solchen Verbund den externen Sensoren über diese Schnittstelle eine Versorgungsspannung bereit, zudem findet über diese Schnittstelle eine Datenkommunikation von den Sensoren zum Steuergerät statt.

Neben einem asynchronen Modus ist für vorstehend genannte Standards auch ein synchroner Modus spezifiziert, welcher dann zur Anwendung kommt, wenn eine Mehrzahl externer Sensoren über dieselbe Zweidrahtleitung mit dem Steuergerät verbunden ist. Zur Synchronisation jeweiliger Datenübertragungen sendet das Steuergerät über die Zweidrahtschnittstelle Sync-Pulse an die jeweiligen Sensoren. Eine Genauigkeit eines Ermittelns jeweiliger Sync-Zeitpunkte, die von jeweiligen Sync-Pulsen abgeleitet werden, wird dabei von Faktoren wie Bauteiltoleranzen, Sperrschicht-Temperaturen, Schwankungen der Versorgungsspannung und/oder einer aus der Versorgungsspannung abgeleiteten geregelten Spannung und/oder einer Frequenz und/oder einer Dauer der Sync-Pulse und/oder einem Spannungsabfall während einer Datenübertragung usw. beeinflusst. Insbesondere bei hohen Datenübertragungsraten ist es erforderlich, dass die Sync-Zeitpunkte in den Sensoren mit hoher Genauigkeit ermittelt werden, um eine stabile Datenkommunikation mit dem Steuergerät zu ermöglichen.

Die Druckschrift DE102014107689 A1 beschreibt eine Kraftfahrzeugsteuerung, die ein Sensorschnittstellenmodul über einen Zweidrahtbus antreibt und eine modulierte Spannung an einen oder mehrere Sensoren überträgt. Die modulierte Spannung umfasst auch einen Synchronisationsimpuls. Die Druckschrift DE102014113162 A1 beschreibt ein Verfahren für einen verbesserten Datendurchsatz in einem Kommunikationssystem.

### Offenbarung der Erfindung

Gemäß einem ersten Aspekt der vorliegenden Erfindung wird ein Sensor, insbesondere ein externer Sensor vorgeschlagen, welche einen umschaltbaren RC-Tiefpass, eine Auswerteeinheit, eine Synchronisationseinheit und eine Zweidrahtschnittstelle aufweist. Die Auswerteeinheit und/oder die Synchronisationseinheit sind beispielsweise jeweils als integrierte oder als diskrete Schaltungen ausgebildet. Die Auswerteeinheit und/oder die Synchronisationseinheit sind dabei beispielsweise als ASIC, FPGA, Prozessor, digitaler Signalprozessor, Mikrocontroller, o. ä., ausgestaltet. Darüber hinaus ist es möglich, dass die Auswerteeinheit und die Synchronisationseinheit in ein und dieselbe Komponente integriert sind (z. B. in einen ASIC). Vorteilhaft sind die Auswerteinheit und/oder die Synchronisationseinheit Bestandteile eines Transceiver-Moduls der Zweidrahtschnittstelle des Sensors.

Die Zweidrahtschnittstelle ist eingerichtet, mit einem Steuergerät verbunden zu werden, um eine durch das Steuergerät bereitgestellte elektrische Versorgungsspannung zum Versorgen des Sensors mit elektrischer Energie aufzunehmen. Eine dem Sensor auf diese Weise bereitgestellte Versorgungsspannung wird direkt und/oder indirekt (z. B. über einen Spannungsregler) durch den Sensor verwendet. Die Zweidrahtschnittstelle ist weiter eingerichtet, der Versorgungsspannung überlagerte Sync-Pulse (Kurzform für "Synchronisations-Pulse") zur Synchronisierung einer Datenübertragung vom Steuergerät zu empfangen und in einem vordefinierten Zeitfenster bezüglich eines durch die Synchronisationseinheit festgestellten Sync-Zeitpunktes (Kurzform für "Synchronisationszeitpunkt") Daten an das Steuergerät zu übertragen, wodurch aus der Datenübertragung resultierende Datenpulse der Versorgungsspannung (VSS) überlagert sind. Diese Datenpulse sind vorzugsweise über die Zweidrahtschnittstelle übertragene Strompulse bzw. Stromsignale, ohne die Datenpulse dadurch auf Strompulse bzw. Stromsignale einzuschränken.

Der umschaltbare RC-Tiefpass ist eingerichtet, ein Referenzsignal durch eine Tiefpassfilterung eines Eingangssignals des RC-Tiefpasses zu erzeugen, wobei ein Verlauf des Eingangssignals mit einem Verlauf der überlagerten Versorgungsspannung korrespondiert. Das Eingangssignal des RC-Tiefpasses entspricht bevorzugt einem Stromsignal, welches aus der Versorgungsspannung abgeleitet wird. Ferner ist es denkbar, dass das Eingangssignal des RC-Tiefpasses der unveränderten Versorgungsspannung entspricht. Darüber hinaus ist es auch denkbar, dass das Eingangssignal Spannungs- oder Stromsignalen entspricht, welche einen Versatz und/oder eine Skalierung bezüglich der Versorgungsspannung aufweisen. Der umschaltbare RC-Tiefpass ist darüber hinaus eingerichtet, in einem ersten Modus des RC-Tiefpasses eine erste Zeitkonstante aufzuweisen und in einem zweiten Modus des RC-Tiefpass eine zweite Zeitkonstante aufzuweisen, wobei die zweite Zeitkonstante kürzer als die erste Zeitkonstante ist.

Die Auswerteeinheit ist eingerichtet, das Referenzsignal zu stabilisieren durch Schalten des RC-Tiefpasses in den ersten Modus wenigstens dann, wenn der Versorgungsspannung ein Sync-Puls oder Daten überlagert sind und durch Schalten des RC-Tiefpasses in den zweiten Modus wenigstens in einem Zeitraum zwischen zwei Sync-Pulsen (d. h., Zeiträume, in welchen keine Sync-Pulse vorliegen), in welchem der Versorgungsspannung keine Daten überlagert sind. Jeweilige Schaltzeitpunkte zum Umschalten zwischen dem ersten Modus und dem zweiten Modus sind beispielsweise in einer an die Auswerteeinheit informationstechnisch angebundenen Speichereinheit abgelegte, vordefinierte Zeitpunkte (d. h. relative Zeitpunkte bezogen auf jeweilige Sync-Zeitpunkte) und/oder Zeitpunkte, welche zur Laufzeit aus dem Signalverlauf der Versorgungsspannung und/oder aus dem mit der Versorgungsspannung korrespondierenden Eingangssignal abgeleitet werden.

Die Synchronisationseinheit ist schließlich eingerichtet, ein Differenzsignal aus dem Eingangssignal und dem Referenzsignal zu bilden und immer dann einen Sync-Zeitpunkt zu ermitteln, wenn das Differenzsignal einen vordefinierten Schwellenwert (d. h., eine Erkennungsschwelle des Sync-Pulses, welche beispielsweise einer halben Pulsamplitude entspricht) überschreitet. Ein auf diese Weise ermittelter Sync-Zeitpunkt ist anschließend für eine Synchronisation bzw. Festlegung eines Sendezeitpunktes einer Datenübertragung vom Sensor zum Steuergerät verwendbar.

Durch vorstehende Konfiguration des erfindungsgemäßen Sensors ergibt sich insbesondere der Vorteil, dass ein auf diese Weise erzeugtes Referenzsignal zumindest in den Zeiträumen, in welchen Sync-Pulse im Sensor empfangen werden, einen Signalwert aufweist, der im Wesentlichen mit der nicht überlagerten Versorgungsspannung korrespondiert. Dadurch werden zeitliche Abweichungen (engl. "jitter") beim Ermitteln der Sync-Zeitpunkte reduziert oder vermieden, da ein Überschreiten des Schwellenwertes bei einem eintreffenden Sync-Puls im Wesentlichen immer an derselben Position bezüglich des Verlaufs des Sync-Pulses ermittelt wird. In einem im Stand der Technik verwendeten Referenzsignal zum Ermitteln der jeweiligen Sync-Zeitpunkte können hingegen mehr oder weniger starke Abweichungen der Sync-Zeitpunkte auftreten, da das Referenzsignal aufgrund einer im Stand der Technik verwendeten Tiefpassfilterung mit einer feststehenden Zeitkonstante zumindest in Zeiträumen eintreffender Sync-Pulse ggf. vom nicht überlagerten Eingangssignal (welches mit der nicht durch Sync-Pulse oder Daten überlagerten Versorgungsspannung korrespondiert) abweicht. Zudem bietet der erfindungsgemäße Sensor den Vorteil, dass ein im Wesentlichen jitter-freies Ermitteln jeweiliger Sync-Zeitpunkte im Sensor unabhängig von einer für die Zweidrahtschnittstelle festgelegten Datenübertragungsrate erfolgt.

Der erfindungsgemäße Sensor bietet somit eine höhere Flexibilität hinsichtlich einer Anwendbarkeit in unterschiedlichen Konfigurationen mit unterschiedlichen Datenübertragungsraten, insbesondere hohen Datenübertragungsraten und/oder mit unterschiedlichen Frequenzen und/oder Dauern der Sync-Pulse und/oder mit unterschiedlichem Stromhub von Sensoren. Es sei allgemein darauf hingewiesen, dass der Sensor und die Zweidrahtschnittstelle bevorzugt eingerichtet sind, in einem Busbetrieb im Verbund mit weiteren Sensoren betrieben zu werden, wobei die Sensoren beispielsweise parallel oder seriell an einem gemeinsam verwendeten Bus angebunden sind.

Die Unteransprüche zeigen bevorzugte Weiterbildungen der Erfindung.

Vorzugsweise realisiert die Zweidrahtschnittstelle ein PSI-Protokoll, insbesondere ein PS15-Protokoll oder ein DSI-Protokoll. Es sei darauf hingewiesen, dass der erfindungsgemäße Sensor auch in Verbindung mit einer davon abweichenden Zweidrahtschnittstelle vorteilhaft einsetzbar ist, sofern davon abweichende Zweidrahtschnittstellen ebenfalls eine Energieversorgung des Sensors über ein mittels der Zweidrahtschnittstelle angebundenes Steuergerät aufweisen und sofern jeweilige Sync-Zeitpunkte für eine Datenübertragung über die Zweidrahtschnittstelle ein stabilisiertes Referenzsignal erfordern.

Bevorzugt ist die Zweidrahtschnittstelle eingerichtet, in einem synchronen Übertragungsmodus betrieben zu werden, um beispielsweise einen Busbetrieb mit einer Mehrzahl an der Zweidrahtschnittstelle angebundener externer Sensoren zu ermöglichen.

Vorteilhaft befindet sich der RC-Tiefpass bei einem Übergang von einem stromlosen Zustand des Sensors in einen bestromten Zustand im ersten Modus. Dies ermöglicht dem Referenzsignal, sich während einer Startphase des Sensors weitgehend an die nicht überlagerte Versorgungsspannung anzunähern, ohne durch ggf. vorhandene Störungen während der Startphase beeinflusst zu werden. Eine Aktivierung des Sensors im zweiten Modus würde hingegen dazu führen, dass das Referenzsignal dem Eingangssignal ggf. auch in solchen Zeiträumen sehr schnell folgt, in welchen Störungen und/oder Sync-Pulse usw. vorliegen, wodurch ggf. keine stabile Ausgangsbasis für das Erzeugen der Referenzspannung erzielbar ist.

Besonders vorteilhaft ist die zweite Zeitkonstante derart festgelegt, dass sich das Referenzsignal in einem Zeitraum, in welchem der RC-Tiefpass im zweiten Modus betrieben wird, bis auf eine vordefinierte maximale Abweichung an das Eingangssignal angleicht. Bevorzugt wird die Zeitkonstante derart festgelegt, dass die vordefinierte maximale Abweichung einem Wert von null oder einem Wert annähernd null entspricht, so dass die Abweichung zwischen dem Referenzsignal und dem Eingangssignal minimiert wird. In Abhängigkeit einer verwendeten Datenübertragungsrate und/oder eines Datenübertragungszeitraums des Sensors und/oder bezüglich der Zweidrahtschnittstelle definierter Toleranzbereiche ist es auch möglich, vordefinierte maximale Abweichungen größer als null zu verwenden. Insbesondere in einem Fall, in welchem die Auswerteeinheit zwischen zwei aufeinanderfolgenden Sync-Pulsen mehrfach zwischen dem ersten Modus und dem zweiten Modus wechselt, ist es möglich, eine relativ große maximale Abweichung bei der Wahl der Zeitkonstante zuzulassen, da auf diese Weise mehrere Zeiträume zwischen den beiden Sync-Pulsen nutzbar sind, um das Referenzsignal sukzessive an das nicht überlagerte Eingangssignal anzugleichen.

In einer vorteilhaften Ausgestaltung des erfindungsgemäßen Sensors umfasst der Sensor weiter einen Schalter, insbesondere einen elektronischen Schalter wie einen Transistor usw., wobei der RC-Tiefpass einen ersten Widerstand aufweist, welcher mit einem Kondensator des RC-Tiefpasses elektrisch verbunden ist, wobei eine Reihenschaltung aus einem zweiten Widerstand und dem Schalter parallel zum ersten Widerstand geschaltet ist und wobei die Auswerteeinheit durch eine Ansteuerung des Schalters eingerichtet ist, den ersten Modus des RC-Tiefpass ist durch Öffnen des Schalters zu aktivieren und den zweiten Modus des RC-Tiefpass durch Schließen des Schalters zu aktivieren. Zu diesem Zweck ist ein Steuereingang des Schalters mit einem Datenausgang der Auswerteeinheit elektrisch verbunden.

Vorzugsweise ist die Auswerteeinheit eingerichtet, den zweiten Modus in zumindest einem der folgenden Zeiträume zu aktivieren, in welchen der Versorgungsspannung weder Sync-Pulse, noch Daten überlagert sind: unmittelbar vor und/oder nach einem jeweiligen Sync Puls und/oder zwischen jeweiligen Datenübertragungszeiträumen zwischen zwei Sync-Pulsen und/oder während eines Datenübertragungszeitraums für den Fall, dass in diesem zumindest anteilig keine Datenübertragung erfolgt oder eine vorliegende Datenübertragung zu diesem Zeitpunkt keine Überlagerung der Versorgungsspannung bewirkt.

Gemäß einem zweiten Aspekt der vorliegenden Erfindung wird ein Sensornetzwerk vorgeschlagen, welches wenigstens zwei Sensoren nach einem der vorstehenden Ansprüche und ein Steuergerät umfasst, wobei das Steuergerät über die Zweidrahtschnittstelle elektrisch mit den mindestens zwei Sensoren verbunden ist und mittels der Zweidrahtschnittstelle eingerichtet ist, die Sensoren mit einer Versorgungsspannung zu versorgen und Daten von den mindestens zwei Sensoren zu empfangen.

Bevorzugt sind jeweilige Zeitpunkte zur Aktivierung jeweiliger erster Modi jeweiliger RC-Tiefpässe der jeweiligen Sensoren in Abhängigkeit jeweiliger sensorspezifischer Datenübertragungszeiträume der jeweiligen Sensoren festgelegt. Auf diese Weise benötigen die jeweiligen Sensoren für das erfindungsgemäße Stabilisieren des Referenzsignals keine Kenntnis über dem eigenen Datenübertragungszeitraum nachfolgende Datenübertragungszeiträume weiterer Sensoren, wenn beispielsweise jeder Sensor des Sensornetzwerks unmittelbar vor und/oder nach seinem eigenen Datenübertragungszeitraum kurzzeitig in den zweiten Modus des Tiefpasses schaltet.

Es sei allgemein darauf hingewiesen, dass eine Stabilisierung des Referenzsignals anstatt durch eine Verwendung eines RC-Tiefpasses mit einer umschaltbaren Zeitkonstante, alternativ oder zusätzlich auch dadurch erreichbar ist, dass einem umschaltbaren oder nicht umschaltbaren RC-Tiefpass ein zweiter Schalter vorgeschaltet wird, welcher den RC-Tiefpass nach einer initialen Aktivierungsphase des Sensors, in welcher das Eingangssignal am RC-Tiefpass zunächst anliegt, nur dann mit dem Eingangssignal verbindet, wenn die Versorgungsspannung weder durch einen Sync-Puls, noch durch Daten überlagert ist.

### Kurze Beschreibung der Zeichnungen

Nachfolgend werden Ausführungsbeispiele der Erfindung unter Bezugnahme auf die begleitende Zeichnung im Detail beschrieben. Dabei zeigen:
- Figur 1: eine schematische Übersicht über Komponenten eines erfindungsgemäßen Sensornetzwerkes;
- Figur 2: eine Übersicht idealisierter Signalverläufe in einem erfindungsgemäßen Sensor;
- Figur 3: eine Übersicht realer Signalverläufe in einem erfindungsgemäßen Sensor; und
- Figur 4: eine beispielhafte Schaltung zum Ermitteln von Sync-Zeitpunkten in einem erfindungsgemäßen Sensor.

### Ausführungsformen der Erfindung

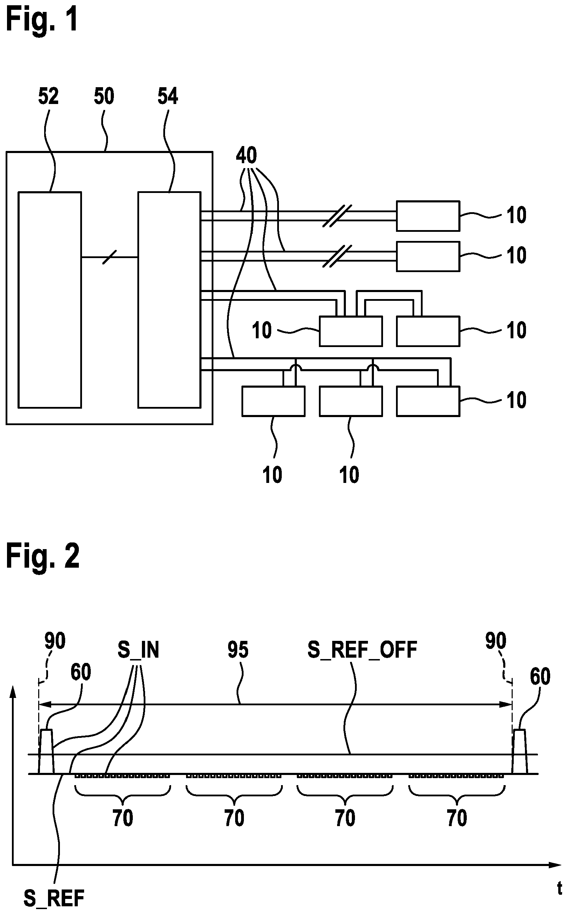

Figur 1 zeigt eine schematische Übersicht über Komponenten eines erfindungsgemäßen Sensornetzwerkes 100, welches hier die PS15-Schnittstelle 40 einsetzt und welches hier ein Sensornetzwerk 100 eines Fortbewegungsmittels ist. Das Fortbewegungsmittel ist beispielsweise ein Straßenfahrzeug (z.B. Motorrad, PKW, Transporter, LKW) oder ein Schienenfahrzeug oder ein Luftfahrzeug/Flugzeug und/oder ein Wasserfahrzeug ist. Das Sensornetzwerk 100 umfasst eine Mehrzahl von Sensoren 10, welche beispielhaft in unterschiedlichen Konfigurationen (u. a. in Form serieller und paralleler Buskonfigurationen) mittels der PS15-Schnittstelle 40 an ein zentrales Steuergerät 50 des Sensornetzwerkes 100 angebunden sind. Das Steuergerät 50 weist einen Transceiver-ASIC 54 auf, welcher das Protokoll der PSI5-Schnittstelle realisiert. Ein mit dem Transceiver-ASIC 54 informationstechnisch gekoppelter Mikrocontroller 52 des Steuergerätes 50, verarbeitet u. a. die von den Sensoren 10 empfangene Daten und stellt diese im Fortbewegungsmittel bereit.

Figur 2 zeigt eine Übersicht idealisierter Signalverläufe in einem erfindungsgemäßen Sensor 10. Dargestellt ist ein Zeitraum zwischen zwei Sync-Pulsen 60 einer PS15-Schnittstelle 40, welcher einem Sync-Intervall 95 entspricht. Ein mit einer Versorgungsspannung VSS korrespondierendes Eingangssignal S_IN, umfasst die Sync-Pulse 60 der PS15-Schnittstelle 40 und eine Mehrzahl von Datenübertragungszeiträumen 70, welche von vier Sensoren 10 genutzt werden, die in einem synchronen Modus an ein und demselben Bus der PS15-Schnittstelle 40 betrieben werden. Ein Referenzsignal S_REF, welches einer idealen Glättung des Eingangssignals S_IN entspricht, weist hier entsprechend einen konstanten Verlauf auf, welcher mit einem Wert der nicht durch Sync-Pulse 60 oder Daten 80 überlagerten Versorgungsspannung VSS korrespondiert. Entsprechend weist ein Offset-Signal S_REF_OFF, welches aus einer Überlagerung des Referenzsignals S_REF mit einem vordefinierten Schwellenwert (d. h., einer Schaltschwelle zur Erkennung eines Sync-Zeitpunktes) gebildet wird ebenfalls einen konstanten Verlauf auf. Ein Differenzsignal aus dem Eingangssignal S_IN und dem Offset-Signal S_REF_OFF weist daher zu stets identischen Zeitpunkten bezüglich des Beginns der jeweiligen Flanken der Sync-Pule 60 einen Vorzeichenwechsel auf. Dieser Zeitpunkt entspricht den jeweiligen aus den Sync-Pulsen 60 abgeleiteten Sync-Zeitpunkten 90, welche zur Synchronisation der den Sync-Pulsen 60 nachfolgenden Datenübertragungen verwendet werden. Das hier beschriebene Ermitteln der jeweiligen Sync-Zeitpunkte 90 stellt eine mögliche Implementierung erfindungsgemäßen Ermittelns der jeweiligen Sync-Zeitpunkte 90 auf Basis des Vergleichs des Differenzsignals aus dem Eingangssignal S_IN und dem Referenzsignal S_REF mit dem vordefinierten Schwellenwert dar.

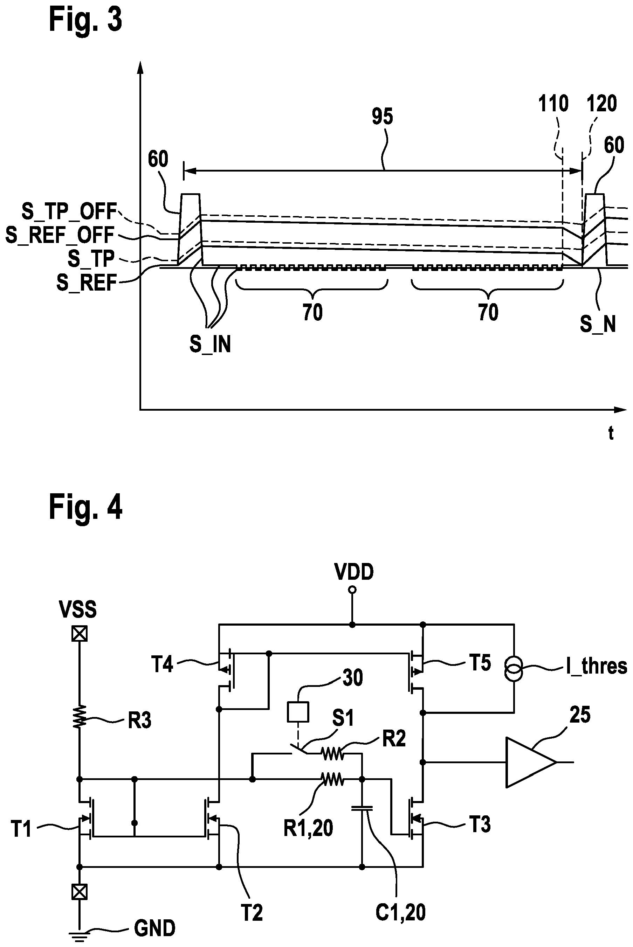

Figur 3 zeigt eine Übersicht realer Signalverläufe in einem erfindungsgemäßen Sensor 10. Zur Vermeidung von Wiederholungen werden nachfolgend nur die Unterschiede zwischen Figur 3 und Figur 2 erläutert. An der PS15-Schnittstelle 40 werden hier anstelle von vier lediglich zwei Sensoren 10 betrieben, weshalb im Vergleich zu Figur 2 entsprechend nur zwei Datenübertragungszeiträume 70 vorhanden sind. Der Verlauf der Versorgungsspannung VSS bzw. der mit dieser korrespondierenden Eingangsspannung S_IN entspricht im Wesentlichem dem in Figur 2. Ein Ergebnis einer Filterung des Eingangssignals S_IN mittels eines im Stand der Technik verwendeten, nicht umschaltbaren RC-Tiefpasses, ist zu Vergleichszwecken in Form eines Signals S_TP gezeigt.

Es ist dargestellt, dass das Signal S_TP durch den eintreffenden Sync-Puls 60 über die Dauer des Sync-Pulses 60 ansteigt. Nach Wegfall des Sync-Pulses 60 fällt das Signal S_TP langsam ab, erreicht beim Eintreffen des nachfolgenden Sync-Pulses 60 aufgrund der gewählten Zeitkonstante des RC-Tiefpasses aber nicht denselben Signalwert, welcher beim Eintreffen des vorangegangenen Sync-Pulses 60 vorlag. Ein analog zur Beschreibung in Fig. 2 gebildetes Offset-Signal S_TP_OFF auf Basis des Signals S_TP, folgt entsprechend dem Verlauf des Signals S_TP. Ein Ermitteln jeweiliger Sync-Zeitpunkte 90 durch eine Betrachtung der Differenz aus dem Eingangssignal S_IN und dem Offset-Signal S_TP_OFF führt somit dazu, dass die zeitlichen Abstände zwischen jeweiligen Flanken der Sync-Pulse 60 und den auf diese Weise ermittelten Sync-Zeitpunkten 90 bei einer Verwendung eines nicht umschaltbaren Tiefpassfilters über die Zeit von jeweiligen Soll-Sync-Zeitpunkten abweichen. Dies kann zu Störungen und/oder Abbrüchen von Datenübertragungen zwischen den jeweiligen Sensoren 10 und dem Steuergerät 50 führen.

Durch eine Verwendung eines erfindungsgemäßen umschaltbaren Tiefpassfilters 20 wird aus dem Eingangssignal S_IN ein Referenzsignal S_REF erzeugt, welches vor dem Eintreffen eines jeweiligen Sync-Pulses 60 an einen Wert des Eingangssignals S_IN angeglichen wird, welchen das Eingangssignal zu Zeitpunkten annimmt, in welchen dem Eingangssignal S_IN weder Sync-Pulse, noch Datenübertragungen überlagert sind. Dies wird beispielsweise durch ein Umschalten des RC-Tiefpasses 20 in den zweiten Modus (d. h., der Modus, welcher die kürzere Zeitkonstante aufweist) zu einem Zeitpunkt 110 und durch ein Umschalten des RC-Tiefpasses 20 in den ersten Modus (d. h., der Modus, welcher die längere Zeitkonstante aufweist) zu einem Zeitpunkt 120 erreicht.

Ein auf Basis des Referenzsignals S_REF erzeugtes Offset-Signal S_REF_OFF, welches anschließend für einen Abgleich mit dem Eingangssignal S_IN zum Ermitteln jeweiliger Sync-Zeitpunkte 90 verwendet wird, ermöglicht, dass jeweilige Sync-Zeitpunkte 90 in annähernd einheitlichen zeitlichen Abständen zu jeweiligen Flanken der jeweiligen Sync-Pulse 60 ermittelt werden. Eine auf Basis solchermaßen ermittelter Sync-Zeitpunkte 90 durchgeführte Datenkommunikation zwischen dem Sensor 10 und dem Steuergerät 50 ist entsprechend stabil bzw. zuverlässig.

Es sei darauf hingewiesen, dass das Eingangssignal S_IN zusätzlich von einem Störsignal S_N überlagert sein kann, welches beispielsweise Störungen umfasst, die in die PSI5-Schnittstelle 40 von eingestreut werden. Darüber hinaus kann das Störsignal S_N auch Verschiebungen der Versorgungsspannung VSS repräsentieren, welche beispielsweise durch Spannungsabfälle während der Datenübertragungszeiträume 70 entstehen können. Die Einflüsse eines solchen Störsignals S_N werden mittels des erfindungsgemäßen Sensors 10 ebenfalls weitgehend kompensiert, so dass deren Einfluss auf eine stabile Datenkommunikation minimiert oder eliminiert wird.

Figur 4 zeigt eine beispielhafte Schaltung zum Ermitteln von Sync-Zeitpunkten 90 in einem erfindungsgemäßen Sensor 10. Eine durch ein Steuergerät 50 über eine PSI5-Schnittstelle 40 an den Sensor 10 übertragene Versorgungsspannung VSS wird mittels eines dritten Widerstandes R3 in einen Stromverlauf umgewandelt und einem ersten Transistor T1 zugeführt, welcher als Referenztransistor eines Stromspiegels arbeitet. Eine Versorgung der Schaltung erfolgt über einen Spannungsregler, welcher mittels der Versorgungsspannung VSS gespeist wird und welcher eine geregelte Spannung VDD an die Schaltung ausgibt. Ein zweiter Transistor T2 und ein dritter Transistor T3 arbeiten als Auskoppeltransistoren des Stromspiegels, wobei der Transistor T2 am Drain-Anschluss denselben Strom führt, wie der Transistor T1 (bei gleichem W/L), also einen Strom, welcher ein Eingangssignal S_IN repräsentiert, dessen Verlauf mit einem Verlauf der Versorgungsspannung VSS korrespondiert (inkl. Sync-Pulsen und Daten).

Aufgrund eines RC-Tiefpasses 20, bestehend aus einem ersten Widerstand R1 und einem Kondensator C1, weist der dritte Transistor T3 am Drain-Anschluss hingegen einen Strom auf, welcher ein Referenzsignal S_REF repräsentiert, welches durch eine Filterung mittels des RC-Tiefpasses 20 einem geglätteten Signalverlauf des Eingangssignals S_IN entspricht. Der Drain-Strom des zweiten Transistors T2 wird mittels eines P-Kanal-Stromspiegels, bestehend aus einem vierten Transistor T4 und einem fünften Transistor T5, auf das Drain des dritten Transistors T3 gespiegelt. Dadurch bildet sich eine Drain-Stromdifferenz des zweiten Transistors T2 und des dritten Transistors T3 in einem Spannungspegel aus (high oder low), welcher verstärkt durch einen Buffer 25 an eine im Sensor 10 befindliche Auswerteschaltung weitergegeben wird. Zur Einstellung einer Schaltschwelle (d. h. einer Erkennungsschwelle für die Sync-Zeitpunkte 90) wird am Drain des dritten Transistors T3 bzw. des fünften Transistors T5, ein Schaltschwellenstrom I_thres eingeprägt.

Vorstehend genannte Komponenten, welche die Differenzbildung zwischen dem Eingangssignal S_IN und dem Referenzsignal S_REF bewirken und welche diese Differenz mit der Schaltschwelle vergleichen und somit die Sync-Zeitpunkte ermitteln, bilden eine Synchronisationseinheit der Schaltung aus. Eine Reihenschaltung aus einem elektronischen Schalter S1 und einem zweiten Widerstand R2 ist zusätzlich parallel zum Widerstand R1 geschaltet, so dass in Abhängigkeit einer Stellung des Schalters S1, ein Widerstand des RC-Tiefpasses 20 und somit eine Zeitkonstante des RC-Tiefpasses 20 veränderbar sind. Ein Steuereingang des Schalters S1 ist elektrisch mit einer Auswerteeinheit 30 verbunden, welche eingerichtet ist, den Schalter S1 wenigstens dann zu öffnen, wenn die Versorgungsspannung VSS durch einen Sync-Puls 60 oder durch Daten 80 überlagert ist und den Schalter wenigstens in einem Zeitraum zwischen zwei Sync-Pulsen 60 zu schließen, in welchem der Versorgungsspannung VSS keine Daten 80 überlagert sind. Zudem ist in der Schaltung ein Bezugspotential GND der Schaltung dargestellt.

## Patentansprüche

1. Sensor (10) umfassend:
• eine Auswerteeinheit (30),
• eine Synchronisationseinheit, und
• eine Zweidrahtschnittstelle (40),
wobei
• die Zweidrahtschnittstelle (40) eingerichtet ist,
∘ mit einem Steuergerät (50) verbunden zu werden, um eine durch das Steuergerät (50) bereitgestellte elektrische Versorgungsspannung (VSS) zum Versorgen des Sensors (10) mit elektrischer Energie aufzunehmen,
oder Versorgungsspannung (VSS) überlagerte Sync-Pulse (60) zur Synchronisierung einer Datenübertragung vom Steuergerät (50) zu empfangen, und
∘ in einem vordefinierten Zeitfenster (70) bezüglich einem durch die Synchronisationseinheit festgestellten Sync-Zeitpunkt (90) Daten an das Steuergerät (50) zu übertragen, wodurch aus der Datenübertragung resultierende Datenpulse der Versorgungsspannung (VSS) überlagert sind,
**gekennzeichnet durch**
einen umschaltbaren C-Tiefpass (20),
• der umschaltbare RC-Tiefpass (20) eingerichtet ist,
∘ ein Referenzsignal (S_REF) durch eine Tiefpassfilterung eines Eingangssignals (S_IN) des RC-Tiefpasses (20) zu erzeugen, wobei ein Verlauf des Eingangssignals (S_IN) mit einem Verlauf der überlagerten Versorgungsspannung (VSS) korrespondiert,
∘ in einem ersten Modus des RC-Tiefpasses (20) eine erste Zeitkonstante aufzuweisen,
∘ in einem zweiten Modus des RC-Tiefpasses (20) eine zweite Zeitkontante aufzuweisen, wobei die zweite Zeitkonstante kürzer als die erste Zeitkonstante ist,
• die Auswerteinheit (30) eingerichtet ist, das Referenzsignal (S_REF) zu stabilisieren durch
∘ Schalten des RC-Tiefpasses (20) in den ersten Modus wenigstens dann, wenn der Versorgungsspannung ein Sync-Puls (60) oder Daten (80) überlagert sind, und
∘ Schalten des RC-Tiefpasses (20) in den zweiten Modus wenigstens in einem Zeitraum zwischen zwei Sync-Pulsen (60), in welchem der Versorgungsspannung (VSS) keine Daten (80) überlagert sind, und
• die Synchronisationseinheit eingerichtet ist,
∘ ein Differenzsignal aus dem Eingangssignal (S_IN) und dem Referenzsignal (S_REF) zu bilden, und
∘ immer dann einen Sync-Zeitpunkt (90) zu ermitteln, wenn das Differenzsignal einen vordefinierten Schwellenwert überschreitet.

2. Sensor (10) nach Anspruch 1, wobei die Zweidrahtschnittstelle (40)
• ein PSI-Protokoll, oder
• ein DSI-Protokoll
realisiert.

3. Sensor (10) nach einem der vorstehenden Ansprüche, wobei die Zweidrahtschnittelle (40) in einem synchronen Übertragungsmodus betreibbar ist.

4. Sensor (10) nach einem der vorstehenden Ansprüche wobei sich der RC-Tiefpass (20) bei einem Übergang von einem stromlosen Zustand des Sensors (10) in einen bestromten Zustand im ersten Modus befindet.

5. Sensor (10) nach einem der vorstehenden Ansprüche, wobei die zweite Zeitkonstante derart festgelegt ist, dass sich das Referenzsignal (S_REF) in einem Zeitraum, in welchem der RC-Tiefpass (20) im zweiten Modus betrieben wird, bis auf eine vordefinierte maximale Abweichung an das Eingangssignal (S_IN) angleicht.

6. Sensor (10) nach einem der vorstehenden Ansprüche weiter umfassend
• einen Schalter (S1), insbesondere einen elektronischen Schalter (S1), wobei
• der RC-Tiefpass (20) einen ersten Widerstand (R1) aufweist, welcher mit einem Kondensator (C1) des RC-Tiefpasses (20) elektrisch verbunden ist,
• eine Reihenschaltung aus einem zweiten Widerstand (R2) und dem Schalter (S1) parallel zum ersten Widerstand (R1) geschaltet ist, und
• die Auswerteeinheit (30) durch eine Ansteuerung des Schalters (S1) eingerichtet ist,
∘ den ersten Modus des RC-Tiefpasses (20) durch Öffnen des Schalters zu aktivieren,
∘ den zweiten Modus des RC-Tiefpasses (20) durch Schließen des Schalters zu aktivieren.

7. Sensor (10) nach einem der vorstehenden Ansprüche, wobei die Auswerteeinheit (30) eingerichtet ist, den zweiten Modus in zumindest einem der folgenden Zeiträumen zu aktivieren, in welchen der Versorgungsspannung (VSS) weder Sync-Pulse (60), noch Daten (80) überlagert sind:
• unmittelbar vor und/oder nach einem jeweiligen Sync-Puls (60), und/oder
• zwischen jeweiligen Datenübertragungszeiträumen (70) zwischen zwei Sync-Pulsen (60), und/oder
• während eines Datenübertragungszeitraums (70), für den Fall, dass in diesem zumindest anteilig keine Datenübertragung erfolgt oder eine vorliegende Datenübertragung zu diesem Zeitpunkt keine Überlagerung der Versorgungsspannung (VSS) bewirkt.

8. Sensornetzwerk (100) umfassend
• wenigstens zwei Sensoren (10) nach einem der vorstehenden Ansprüche, und
• ein Steuergerät (50),
wobei das Steuergerät (50) über die Zweidrahtschnittstelle (40) elektrisch mit den mindestens zwei Sensoren (10) verbunden ist und mittels der Zweidrahtschnittstelle (40) eingerichtet ist,
• die Sensoren (10) mit einer Versorgungsspannung (VSS) zu versorgen, und
• Daten (80) von den mindestens zwei Sensoren (10) zu empfangen.

9. Sensornetzwerk (100) nach Anspruch 8, wobei jeweilige Zeitpunkte zur Aktivierung jeweiliger erster Modi jeweiliger RC-Tiefpässe (20) der jeweiligen Sensoren (10) in Abhängigkeit jeweiliger sensorspezifischer Datenübertragungszeiträume (70) der jeweiligen Sensoren (10) festgelegt sind.

## Claims

1. Sensor (10) comprising:
• an evaluation unit (30),
• a synchronization unit, and
• a two-wire interface (40), wherein
• the two-wire interface (40) is configured
∘ to be connected to a control device (50) in order to receive an electrical supply voltage (VSS), provided by the control device (50), for supplying the sensor (10) with electrical energy,
∘ to receive sync pulses (60), which are overlaid on the supply voltage (VSS), for synchronizing a data transmission from the control device (50), and
∘ to transmit data to the control device (50) in a predefined time window (70) with respect to a sync time (90) identified by the synchronization unit, whereby data pulses resulting from the data transmission are overlaid on the supply voltage (VSS),
**characterized by**
• a switchable RC low-pass filter (20),
• wherein the switchable RC low-pass filter (20) is configured
∘ to generate a reference signal (S_REF) by low-pass filtering an input signal (S_IN) of the RC low-pass filter (20), a characteristic of the input signal (S_IN) corresponding to a characteristic of the overlaid supply voltage (VSS),
∘ to exhibit a first time constant in a first mode of the RC low-pass filter (20),
∘ to exhibit a second time constant in a second mode of the RC low-pass filter (20), the second time constant being shorter than the first time constant,
• the evaluation unit (30) is configured to stabilize the reference signal (S_REF) by
o switching the RC low-pass filter (20) to the first mode at least when the supply voltage has an overlaid sync pulse (60) or overlaid data (80), and
o switching the RC low-pass filter (20) to the second mode at least in a period between two sync pulses (60) in which the supply voltage (VSS) has no overlaid data (80), and
• the synchronization unit is configured
o to form a difference signal from the input signal (S_IN) and the reference signal (S_REF), and
o to determine a sync time (90) whenever the difference signal exceeds a predefined threshold value.

2. Sensor (10) according to Claim 1, wherein the two-wire interface (40)implements • a PSI protocol or •
a DSI protocol.

3. Sensor (10) according to either of the preceding claims, wherein the two-wire interface (40) can be operated in a synchronous transmission mode.

4. Sensor (10) according to one of the preceding claims, wherein the RC low-pass filter (20) is in the first mode for a transition from a deenergized state of the sensor (10) to an energized state.

5. Sensor (10) according to one of the preceding claims, wherein the second time constant is defined in such a way that the reference signal (S_REF) is aligned with the input signal (S_IN), with the exception of a predefined maximum variance, in a period in which the RC low-pass filter (20) is operated in the second mode.

6. Sensor (10) according to one of the preceding claims, further comprising
• a switch (S1), in particular an electronic switch (S1), wherein
• the RC low-pass filter (20) has a first resistor (R1), which is electrically connected to a capacitor (C1) of the RC low-pass filter (20),
• a series circuit comprising a second resistor (R2) and the switch (S1) is connected in parallel with the first resistor (R1), and
• the evaluation unit (30) is configured by an actuation of the switch (S1)
o to activate the first mode of the RC low-pass filter (20) by opening the switch,
o to activate the second mode of the RC low-pass filter (20) by closing the switch.

7. Sensor (10) according to one of the preceding claims, wherein the evaluation unit (30) is configured to activate the second mode in at least one of the following periods, in which the supply voltage (VSS) has neither overlaid sync pulses (60) nor overlaid data (80):
• immediately before and/or after a respective sync pulse (60), and/or
• between respective data transmission periods (70) between two sync pulses (60), and/or
• during a data transmission period (70), if no data transmission takes place in at least part of said data transmission period or an existing data transmission brings about no overlay on the supply voltage (VSS) at this time.

8. Sensor network (100) comprising
• at least two sensors (10) according to one of the preceding claims, and
• a control device (50),
wherein the control device (50) is electrically connected to the at least two sensors (10) via the two-wire interface (40) and is configured by means of the two-wire interface (40)
• to supply the sensors (10) with a supply voltage (VSS), and
• to receive data (80) from the at least two sensors (10) .

9. Sensor network (100) according to Claim 8, wherein respective times for activating respective first modes of respective RC low pass filters (20) of the respective sensors (10) are defined on the basis of respective sensor-specific data transmission periods (70) of the respective sensors (10).

## Revendications

1. Capteur (10), comprenant :
• une unité d'évaluation (30),
• une unité de synchronisation, et
• une interface à deux fils (40),
• l'interface à deux fils (40) étant conçue pour,
o être reliée à un contrôleur (50) afin de recevoir une tension d'alimentation (VSS) électrique fournie par le contrôleur (50) en vue d'alimenter le capteur (10) en énergie électrique,
o recevoir des impulsions de synchronisation (60) superposées à la tension d'alimentation (VSS) pour synchroniser une transmission de données à partir du contrôleur (50), et
o transmettre des données au contrôleur (50) dans une fenêtre temporelle (70) prédéfinie par rapport à un instant de synchronisation (90) fixé par l'unité de synchronisation, moyennant quoi des impulsions de données résultant de la transmission de données sont superposées à la tension d'alimentation (VSS),
**caractérisé par**
• un filtre passe-bas RC (20) permutable,
• le filtre passe-bas RC (20) permutable étant conçu pour,
o générer un signal de référence (S_REF) par un filtrage passe-bas d'un signal d'entrée (S_IN) du filtre passe-bas RC (20), un tracé du signal d'entrée (S_IN) correspondant à un tracé de la tension d'alimentation (VSS) superposée,
o dans un premier mode du filtre passe-bas RC (20), présenter une première constante de temps,
o dans un deuxième mode du filtre passe-bas RC (20), présenter une deuxième constante de temps, la deuxième constante de temps étant plus courte que la première constante de temps,
• l'unité d'évaluation (30) est conçue pour stabiliser le signal de référence (S_REF) par
o commutation du filtre passe-bas RC (20) dans le premier mode au moins lorsqu'une impulsion de synchronisation (60) ou des données (80) sont superposées à la tension d'alimentation, et
o commutation du filtre passe-bas RC (20) dans le deuxième mode au moins dans un intervalle de temps entre deux impulsions de synchronisation (60), dans lequel aucune donnée (80) n'est superposée à la tension d'alimentation (VSS), et
• l'unité de synchronisation est conçue pour,
o former un signal différentiel à partir du signal d'entrée (S_IN) et du signal de référence (S_REF), et
o toujours déterminer un instant de synchronisation (90) lorsque le signal différentiel dépasse une valeur de seuil prédéfinie.

2. Capteur (10) selon la revendication 1, l'interface à deux fils (40) réalisant
• un protocole PSI ou
• un protocole DSI.

3. Capteur (10) selon l'une des revendications précédentes, l'interface à deux fils (40) pouvant fonctionner dans un mode de transmission synchrone.

4. Capteur (10) selon l'une des revendications précédentes, le filtre passe-bas RC (20) se trouvant dans le premier mode lors d'une transition d'un état hors tension du capteur (10) à un état sous tension.

5. Capteur (10) selon l'une des revendications précédentes, la deuxième constante de temps étant fixée de telle sorte que le signal de référence (S_REF) se mette au même niveau que le signal d'entrée (S_IN), à l'exception d'un écart maximal prédéfini, pendant une période dans laquelle le filtre passe-bas RC (20) fonctionne dans le deuxième mode.

6. Capteur (10) selon l'une des revendications précédentes, comprenant en outre
• un commutateur (S1), notamment un commutateur électronique (S1),
• le filtre passe-bas RC (20) possédant une première résistance (R1), laquelle est reliée électriquement à un condensateur (C1) du filtre passe-bas RC (20),
• un circuit série composé d'une deuxième résistance (R2) et du commutateur (S1) étant branché en parallèle avec la première résistance (R1), et
• l'unité d'évaluation (30), par une excitation de l'interrupteur (S1), étant conçue pour
∘ activer le premier mode du filtre passe-bas RC (20) en ouvrant le commutateur,
∘ activer le deuxième mode du filtre passe-bas RC (20) en fermant le commutateur.

7. Capteur (10) selon l'une des revendications précédentes, l'unité d'évaluation (30) étant conçue pour activer le deuxième mode dans au moins l'une des périodes suivantes, dans lesquelles ni des impulsions de synchronisation (60), ni des données (80) ne sont superposées à la tension d'alimentation (VSS) :
• immédiatement avant et/ou après une impulsion de synchronisation (60) correspondante, et/ou
• entre des périodes de transmission de données (70) respectives entre deux impulsions de synchronisation (60), et/ou
• pendant une période de transmission de données (70), dans le cas où aucune transmission de données n'a lieu au moins partiellement pendant celle-ci ou qu'une transmission de données présente à ce moment-là ne provoque pas de superposition de la tension d'alimentation (VSS).

8. Réseau de capteurs (100), comprenant
• au moins deux capteurs (10) selon l'une des revendications précédentes, et
• un contrôleur (50),
le contrôleur (50) étant relié électriquement aux au moins deux capteurs (10) par le biais de l'interface à deux fils (40) et étant conçu pour, au moyen de l'interface à deux fils (40)
• alimenter les capteurs (10) avec une tension d'alimentation (VSS), et
• recevoir des données (80) provenant des au moins deux capteurs (10).

9. Réseau de capteurs (100) selon la revendication 8, des instants respectifs pour l'activation de premiers modes respectifs des filtres passe-bas RC (20) respectifs des capteurs (10) respectifs étant fixés en fonction de périodes de transmission de données (70) respectives spécifiques aux capteurs (10) respectifs.
